# FASCICULE DE BREVET EUROPEEN

(11) **EP 1 289 226 B1**
(45) Date de publication et mention de la délivrance du brevet: **04.04.2007**
(21) Numéro de dépôt: 02078404.7
(22) Date de dépôt: 08.08.2002
(51) Int. Cl.: H04L 29/06

(54) **Equipement d'automatisme connecté à un réseau TCP/IP**
Mit einem TCP/IP Netzwerk verbundene Automatisierungsvorrichtung
Automation equipment connected to a tcp/ip network

(30) Priorité: 03.09.2001 FR 0111506
(43) Date de publication de la demande: 05.03.2003
(73) Titulaire: Schneider Automation, 06560 Valbonne (FR)
(72) Inventeur: Genin, Jean-Jacques, 06100 Nice (FR); Godicke, Thomas, 06560 Valbone (FR); Gorisse, Francois, 06250 Mougins (FR)

(56) Documents cités:
- WO-A-99/13388
- US-A- 6 151 625

## Description

La présente invention concerne un équipement d'automatisme directement relié à un réseau de communication TCP/IP.

Le protocole standard IP (Internet Protocol) définit un protocole d'interconnexion de réseaux de communication, au niveau de la couche réseau. Le protocole standard TCP (Transport Control Protocol) définit un mécanisme de transport des données qui garantit un acheminement de bout en bout. Ces deux protocoles, qui sont largement utilisés dans des réseaux globaux de type Internet, Intranet ou Extranet, sont regroupés dans le présent exposé sous le terme "réseau TCP/IP".

Un équipement d'automatisme désigne ci-après un automate programmable, une station de contrôle/commande, une commande numérique ou tout équipement pouvant contenir et exécuter un programme d'application dans le but de contrôler et/ou commander tout ou partie d'une application d'automatisme appartenant par exemple au domaine des automatismes industriels, des automatismes du bâtiment ou du contrôle/commande des réseaux électriques de distribution. Un équipement d'automatisme peut également comporter des modules métiers dotés eux aussi d'unité de traitement pour assurer des fonctions particulières relatives à un métier d'automatisme (tel que pesage, régulation, positionnement, ...) ainsi que d'autres modules tels que des modules d'entrées/sorties. Les modules d'un équipement d'automatisme sont reliés et synchronisés entre eux par un bus de communication interne, appelé généralement bus fond de panier, qui utilise généralement un protocole propriétaire optimisé pour les échanges temps réel d'entrées-sorties.

Dans un équipement d'automatisme, il est connu de disposer d'un module de communication d'une part connecté au bus de communication interne de l'équipement d'automatisme, et d'autre part relié à un réseau TCP/IP. Ce module de communication réalise une passerelle entre d'un côté les services de communication internes et propriétaires et de l'autre le réseau TCP/IP, ***voir notamment le document WO99*/*13388.***

Cependant, dans ces conditions, il s'avère très complexe de maintenir les caractéristiques d'une communication selon le protocole TCP/IP de bout en bout entre deux entités communiquant entre elles. En effet, la passerelle d'un module réseau coupe le flux de données de TCP et n'assure pas non plus la transparence de IP. On perd ainsi les avantages en performance, en fiabilité et en transparence que procurent le protocole TCP/IP.

Par ailleurs, on connaît un système de communication dans un équipement d'automatisme qui permet de réaliser, sur le bus fond de panier de communication interne, des échanges d'informations conformes au protocole de communication TCP/IP. Pour échanger entre eux des informations conformes au protocole de communication TCP/IP, les modules de l'équipement d'automatisme comportent une adresse IP propre et une pile TCP/IP exécutable par l'unité de traitement de ces modules. De plus, l'équipement d'automatisme comporte un module réseau, raccordé à un réseau TCP/IP externe et au bus fond de panier interne, permettant aux modules de l'équipement d'automatisme de réaliser directement sur le réseau TCP/IP des échanges d'informations conformes au protocole de communication TCP/IP, via le bus fond de panier interne.

Néanmoins, cette solution utilise le bus fond de panier interne de l'équipement d'automatisme pour acheminer la communication TCP/IP, ce qui peut être parfois néfaste pour les performances des communications temps réel liées à l'application d'automatisme, et de plus nécessite l'emploi d'un coupleur réseau dédié.

Le but de l'invention est de proposer un équipement d'automatisme possédant un accès direct au protocole TCP/IP pour des échanges sur un réseau TCP/IP, sans avoir recours à une passerelle au niveau de la couche application qui peut se révéler coûteuse. Grâce au protocole TCP/IP, l'équipement d'automatisme pourra directement se connecter à des systèmes d'information d'entreprise (ERP Enterprise Resource Planning, MES Manufacturing Execution System) et pourra utiliser les protocoles et les architectures du WEB comme par exemple les standards UDP, HTTP, XML, WAP, FTP, SMTP, SNMP, DHCP, DNS, etc.... De plus, l'invention propose de gérer la communication TCP/IP directement dans l'unité centrale de l'équipement d'automatisme, sans passer par le bus fond de panier, tout en conservant la maîtrise des différentes affectations de l'unité centrale pour ne pas que les communications par le réseau TCP/IP ne perturbent le fonctionnement temps réel du programme d'application effectuant le contrôle/commande de l'application d'automatisme. De plus, le bus fond de panier pourra être avantageusement réservé aux échanges de type entrées/sorties ou de type messages temps réel (messages réflexes, par exemple) de l'équipement d'automatisme.

Pour cela, l'invention décrit un équipement d'automatisme comportant une unité centrale qui possède au moins une mémoire comprenant un système d'exploitation temps réel et un programme d'application chargé d'effectuer des fonctions de contrôle ou de commande dans une application d'automatisme. L'équipement d'automatisme comporte un pilote de réseau TCP/IP qui est directement intégré dans l'unité centrale sans passer par un bus de fond de panier, le système d'exploitation de l'unité centrale comprenant un module de gestion des communications sur le réseau TCP/IP et une tâche d'asservissement chargée d'asservir l'exécution du module de gestion des communications aux caractéristiques de l'application d'automatisme pour ne pas perturber le fonctionnement du programme d'application.

Selon une particularité, lorsque l'exécution du programme d'application est en mode périodique, la tâche d'asservissement comprend des moyens de validation permettant d'autoriser le fonctionnement du module de gestion des communications entre la fin d'un cycle du programme d'application et le début du cycle suivant. Par ailleurs, lorsque l'exécution du programme d'application est en mode cyclique, la tâche d'asservissement comprend des moyens de validation pour autoriser, à la fin d'un cycle du programme d'application, le fonctionnement du module de gestion des communications durant une durée paramétrable par un utilisateur.

Selon une autre particularité, le module de gestion des communications comprend un premier sous-module qui exploite une zone mémoire pour mémoriser des données transmises ou à destination du programme d'application. Le module de gestion des communications comprend aussi un deuxième sous-module qui exploite une zone mémoire pour mémoriser des données transmises ou à destination du réseau TCP/IP.

Selon une autre particularité, le premier sous-module du module de gestion des communications transmet les données en provenance du programme d'application d'automatisme vers le deuxième sous-module du module de gestion des communications pour construire un message transmis sur le réseau TCP/IP.

Selon une autre particularité, le deuxième sous-module du module de gestion des communications transmet les informations représentatives des messages en provenance du réseau TCP/IP vers le premier sous-module du module de gestion des communications afin d'être exploité par le programme d'application.

Les informations représentatives des messages reçus du réseau TCP/IP sont notamment des commandes de mise à jour du programme d'application, des commandes de modification des paramètres d'exécution du programme d'application dont la gestion de la cohérence doit être assurée par l'utilisateur. De même, les données mémorisées par le premier sous-module en provenance du programme d'application sont notamment des indications d'état du fonctionnement de l'automatisme dont la gestion de la cohérence doit être assurée par l'utilisateur.

Selon une autre particularité, le pilote de réseau TCP/IP exécute une procédure de routage des messages reçus du réseau TCP/IP qui est basée sur des niveaux de priorité contenus dans l'adressage IP.

L'invention, avec ses caractéristiques et avantages, est maintenant détaillée en référence aux dessins annexés dans lesquels :

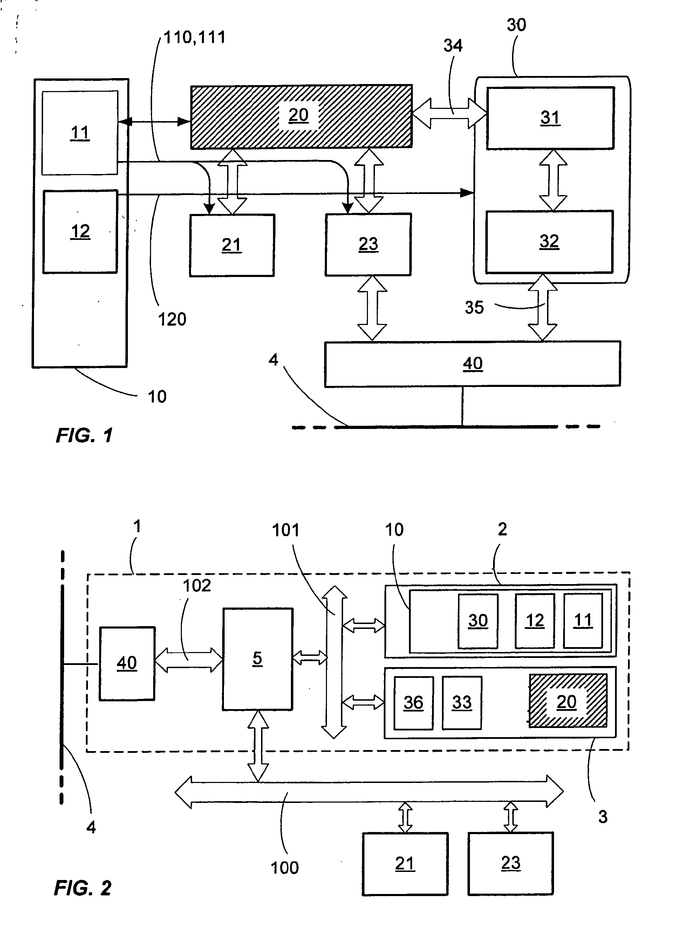

- la figure 1 représente le schéma d'une l'architecture de communication d'un équipement d'automatisme selon le principe de l'invention,
- la figure 2 schématise un exemple d'architecture d'un tel équipement d'automatisme.

L'équipement d'automatisme selon l'invention comprend une connexion réseau contrôlée par un pilote (40) (en anglais : driver) supportant le protocole TCP/IP. L'équipement d'automatisme comprend, de manière connue, une unité centrale (1) comportant au moins un processeur (5) et un bus mémoire (101) d'échange avec une mémoire vive (3) et avec une mémoire morte (2). L'équipement d'automatisme comprend également un bus (100) de communication interne, appelé bus fond de panier dans le présent document, un gestionnaire d'entrées-sorties (21) ainsi qu'un gestionnaire de traitement de messages temps réel (23), ces gestionnaires étant connectés sur le bus (100) de fond de panier de l'équipement d'automatisme. La mémoire morte (2) comprend le programme constructeur (10) ou système d'exploitation de l'équipement d'automatisme chargé de contrôler et commander l'exécution d'un programme d'application (20) ou programme utilisateur mémorisé habituellement dans la mémoire vive (3) de l'équipement d'automatisme. Il est rappelé que, pour contrôler et/ou commander une application d'automatisme, le programme d'application (20) traite des données d'entrées-sorties dont le transfert est effectué par le gestionnaire d'entrées-sorties (21) et gère des données de couplage de plusieurs équipements dont le transfert est effectué par le gestionnaire de traitement de messages temps réel (23). Selon l'invention, l'équipement d'automatisme comporte un pilote (40) de réseau TCP/IP qui est directement intégré à l'unité centrale (1) par un bus logiciel (102) spécifique, sans utiliser le bus (100) de fond de panier, et qui permet de connecter l'équipement d'automatisme au réseau TCP/IP (4).

Le système d'exploitation (10) de l'équipement d'automatisme comprend également un gestionnaire de balayage (11) chargé de générer l'envoi de signaux de début de cycle (111) et de fin de cycle (110) du programme d'application (20). Ces signaux sont envoyés vers le gestionnaire d'entrées-sorties (21) et vers le gestionnaire de traitement de messages temps réel (23) de façon à les synchroniser avec le déroulement du programme d'application (20).

Selon l'invention, le système d'exploitation (10) de l'équipement d'automatisme comprend également un module (30) de gestion des communications avec le réseau TCP/IP (4) et une tâche d'asservissement (12) de ce module (30).

Le module (30) de gestion des communications réalise l'interface entre d'une part le programme d'application (20) qui exécute les fonctions de contrôle/commande d'automatisme et d'autre part le réseau TCP/IP (4). Ce logiciel est constitué de deux sous-modules (31,32).

Un premier sous-module (31) présente des données qui sont facilement exploitables par le programme d'application (20) car elles sont cohérentes et compatibles avec le format des objets utilisés par le programme d'application. Leur exploitation n'implique donc pas de traitement supplémentaire susceptible de dégrader les performances temps réel du système. En outre le programme d'application (20) et le sous-module (31) partagent les mêmes zones mémoires dans la mémoire vive (3). Ces données sont, à titre exemple, des résultats de traitement du programme d'application comme des fichiers d'historique, des valeurs de consignes, des informations de diagnostic, etc.

Un second sous-module (32) reçoit les messages du réseau (4) qui ne sont pas destinés au module gestionnaire de traitement des messages temps réel (23). Ainsi, une procédure de routage est exécutée par le pilote (40) pour distinguer les messages temps réel destinés au gestionnaire (23) et les autres messages de communication destinés au module (30). Selon un mode de réalisation, cette procédure de routage est basée sur l'utilisation d'un port propriétaire donné qui est réservé pour la messagerie temps réel circulant sur TCP/IP. Selon un autre mode de réalisation, cette procédure de routage se base sur des niveaux de priorité contenus dans l'adressage IP et qui sont en cours de standardisation au niveau de l'IETF (Internet Engineering Task Force), par exemple dans le protocole IPv6. A titre indicatif, l'aiguillage pourrait aussi être réalisé à partir du protocole d'application utilisé ; les protocoles du WEB seraient alors dirigés vers le sous-module (32) de réception des messages du réseau (4).

Le sous-module (32) expose, par l'intermédiaire d'une mémoire vive (36), les données qu'il reçoit en un format compréhensible pour le sous-module (31), lequel les traduit en données exploitables par le programme d'application (20). Lorsqu'un message est destiné au module (30) de gestion des communications, il est envoyé par la liaison (35) vers le deuxième sous-module (32). Le message est dans un premier temps mémorisé dans la mémoire (36). Le deuxième sous-module (32) extrait ensuite les informations du message et les transmet au premier sous-module (31) pour traitement. Eventuellement, ces informations peuvent être mémorisées dans une mémoire intermédiaire tampon (33) pour ne pas être perdues dans le cas où l'exécution du module (30) de gestion des communications serait interrompue. Le premier sous-module (31) exécute ensuite les commandes représentatives des informations extraites du message entrant. Réciproquement, pour l'émission d'un message ou pour la réponse à un message entrant, le premier sous module (31) envoie les informations qu'il a reçues comme représenté par la flèche (34), vers le deuxième sous-module (32). Le deuxième sous-module (32) construit alors, à partir des informations reçues du module (31) et mémorisées dans sa mémoire (36), un message conforme au protocole TCP/IP.

Selon l'invention, le module (30) de gestion des communications est une application d'arrière-plan, c'est-à-dire que son exécution a une priorité plus basse que la priorité du programme d'application en ce qui concerne l'utilisation des ressources de l'équipement d'automatisme.

Pour ce faire, le système (10) d'exploitation comprend une tâche d'asservissement (12) du module (30) de gestion des communications. Cette tâche d'asservissement (12) gère, par une liaison (120), le temps d'attribution de l'unité centrale et l'allocation des ressources mémoire qui sont dédiés pour le module (30) de gestion des communications, de façon à ce que l'exécution du programme d'application (20) ne soit pas perturbée par l'exécution en arrière-plan du module (30) de gestion des communications. Selon l'invention, la tâche d'asservissement (12) envoie des signaux par la liaison (120) vers le module (30) de gestion des communications, pour, d'une part valider ou invalider son exécution et d'autre part affecter les ressources mémoire et le temps d'attribution de l'unité centrale (1) à l'exécution des instructions du module (30) de gestion des communications.

Lorsque le fonctionnement du programme d'application (20) est périodique, chaque début de cycle du programme d'application n'est déclenché qu'après une période de temps déterminée. Cette période du cycle du programme d'application (20) est généralement choisie par l'utilisateur en fonction du type d'application d'automatisme à contrôler. En cas de fonctionnement périodique, la tâche d'asservissement (12) valide l'exécution du module (30) de gestion des communications, par un premier signal de niveau déterminé fourni sur la liaison (120), entre d'une part le signal de fin d'un cycle (110) et d'autre part le signal (111) de début du cycle suivant du programme d'application (20), générés par le gestionnaire (11) de balayage et envoyés au gestionnaire d'entrées/sorties (21) et au gestionnaire de traitement des messages temps réel (23). Pendant l'exécution d'un cycle du programme d'application (20), la tâche d'asservissement (12) invalide l'exécution du module (30) de gestion des communications, par un deuxième niveau de signal transmis sur la liaison (120). L'invalidation consiste en une mise en veille de l'exécution de la gestion des communications, de sorte que lorsque le premier niveau de signal de validation est de nouveau reçu sur la liaison (120) par le module (30) de gestion des communications, l'exécution du module (30) de gestion des communications reprend là où elle a été arrêtée. Ainsi, la tâche (12) est toujours synchronisée avec les échanges d'entrées-sorties de l'équipement d'automatisme.

Lorsque l'exécution du programme d'application (20) n'est pas périodique mais cyclique, c'est-à-dire que le début d'un cycle du programme d'application n'est pas lié au déclenchement d'une période déterminée mais dépend de la fin du cycle précédent, la tâche d'asservissement (12) valide l'exécution du module (30) de gestion des communications, par un signal sur la liaison (120), pendant un certain laps de temps, à la fin d'un cycle du programme d'application. Ce laps de temps dédié au module (30) est initialement fixé par défaut mais l'utilisateur a avantageusement la possibilité de le paramétrer pour l'optimiser tout en faisant en sorte que l'exécution du programme d'application (20) ne soit pas perturbée par l'exécution du module (30) de gestion des communications. Le début du cycle suivant du programme d'application (20) n'est alors déclenché que lorsque la durée dédiée au module (30) est écoulée ou lorsque le module (30) n'a plus de tâche à effectuer. La valeur de paramétrage de cette durée est déterminée par l'utilisateur en fonction des besoins de l'application d'automatisme, par exemple.

On comprend que le module (30) de gestion des communications et la tâche d'asservissement (12) correspondante permettent de doter l'équipement d'automatisme d'une fonction de communication avec un réseau TCP/IP (4) sans perturber l'exécution temps réel du programme d'application de l'automatisme et sans utiliser le bus fond de panier de l'équipement d'automatisme. Ainsi, un système d'information connecté au réseau TCP/IP (4) de l'équipement d'automatisme selon l'invention peut accéder directement à des informations de l'équipement d'automatisme sans le perturber par l'intermédiaire, par exemple, d'un navigateur de type Internet, dans la mesure où le module (30) de gestion des communications supporte le protocole correspondant.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Équipement d'automatisme comportant une unité centrale (1) qui laquelle possède au moins une mémoire (2, 3) comprenant un système d'exploitation (10) temps réel et un programme d'application (20) chargé d'effectuer des fonctions de contrôle ou de commande dans une application d'automatisme, **caractérisé en ce que** l'équipement d'automatisme comporte un pilote (40) de réseau TCP/IP (4) qui est directement intégré dans l'unité centrale (1) sans passer par un bus de fond de panier, le système d'exploitation (10) de l'unité centrale (1) comprenant un module (30) de gestion des communications sur le réseau TCP/IP (4) et une tâche d'asservissement (12) chargée d'asservir l'exécution du module (30) de gestion des communications aux caractéristiques de l'application d'automatisme pour ne pas perturber le fonctionnement du programme d'application (20).

2. Équipement d'automatisme selon la revendication 1, **caractérisé en ce que** lorsque l'exécution du programme d'application (20) est en mode périodique, la tâche d'asservissement (12) comprend des moyens de validation (120) permettant d'autoriser le fonctionnement du module de gestion (30) des communications entre la fin d'un cycle du programme d'application (20) et le début du cycle suivant.

3. Équipement d'automatisme selon la revendication 1, **caractérisé en ce que** lorsque l'exécution du programme d'application (20) est en mode cyclique, la tâche d'asservissement (12) comprend des moyens de validation (120) permettant d'autoriser, à la fin d'un cycle du programme d'application (20), le fonctionnement du module de gestion (30) des communications durant une durée paramétrable par un utilisateur.

4. Équipement d'automatisme selon l'une des revendications 1 à 3, **caractérisé en ce que** le module (30) de gestion des communications comprend un premier sous-module (31) qui exploite une zone mémoire pour mémoriser des données transmises ou à destination du programme d'application (20).

5. Équipement d'automatisme selon la revendication 4, **caractérisé en ce que** le module (30) de gestion des communications comprend un deuxième sous-module (32) qui exploite une zone mémoire pour mémoriser des données transmises ou à destination du réseau TCP/IP (4).

6. Équipement d'automatisme selon les revendications 4 et 5, **caractérisé en ce que** le premier sous-module (31) du module (30) de gestion des communications transmet les données en provenance du programme d'application (20) d'automatisme vers le deuxième sous-module (32) du module de gestion des communications pour construire un message transmis sur le réseau TCP/IP (4).

7. Équipement d'automatisme selon la revendication 6, **caractérisé en ce que** le deuxième sous-module (32) du module (30) de gestion des communications transmet les informations représentatives des messages en provenance du réseau TCP/IP vers le premier sous-module (31) du module de gestion des communications afin d'être exploité par le programme d'application (20).

8. Équipement d'automatisme selon l'une des revendications précédentes, **caractérisé en ce que** le pilote (40) de réseau TCP/IP exécute une procédure de routage des messages reçus du réseau TCP/IP (4) qui est basée sur des niveaux de priorité contenus dans l'adressage IP.

## Claims

1. Automation equipment comprising a system unit (1) which has at least one memory (2, 3) comprising a real time operating system (10) and an application program (20) that performs monitoring or control functions in an automation application, **characterized in that** the automation equipment comprises a driver (40) for the TCP/IP network (4) that is directly included in the system unit (1) without going through a back panel bus, the operating system (10) of the system unit (1) comprising a management module (30) for communications on the TCP/IP network (4) and a control task (12) responsible for controlling execution of the communications management module (30) to the characteristics of the automation application to avoid disturbing operation of the application program (20).

2. Automation equipment according to claim 1, **characterized in that** when the application program (20) is executed in a periodic mode, the control task (12) comprises validation means (120) to authorise operation of the communications management module (30) between the end of an application program cycle (20) and the beginning of the next cycle.

3. Automation equipment according to claim 1, **characterized in that** when the application program (20) is executed in a cyclic mode, the control task (12) comprises validation means (120) to authorise operation of the communications management module (30) at the end of an application program cycle (20), for a time that a user can configure.

4. Automation equipment according to any one of claims 1 to 3, **characterized in that** the communications management module (30) comprises a first sub-module (31) that uses a memory area to memorise data transmitted or to be sent to the application program (20).

5. Automation equipment according to claim 4, **characterized in that** the communications management module (30) also comprises a second sub-module (32) that uses a memory area to memorise transmitted data or data to be sent to the TCP/IP network (4).

6. Automation equipment according to one of claims 4 and 5, **characterized in that** the first sub-module (31) of the communications management module (30) transmits data from the automation application program (20) to the second sub-module (32) of the communications management module to build up a message transmitted on the TCP/IP network (4).

7. Automation equipment according to claim 6, **characterized in that** the second sub-module (32) of the communications management module (30) transmits information representative of messages from the TCP/IP network to the first sub-module (31) of the communications management module so that it can be used by the application program (20).

8. Automation equipment according to any of the previous claims, **characterized in that** the TCP/IP network driver (40) executes a routing procedure for messages received from the TCP/IP network that is based on priority levels contained in the IP address.

## Patentansprüche

1. Automatisierungsgerät mit einer Zentraleinheit (1), die mindestens einen Speicher (2, 3) aufweist, der ein Echtzeit-Betriebssystem (10) und ein Anwendungsprogramm (20) enthält, das die Aufgabe hat, Überwachungs- oder Steuerfunktionen in einer Automatisierungsanwendung durchzuführen, **dadurch gekennzeichnet, dass** das Automatisierungsgerät einen Treiber (40) des TCP/IP-Netzwerks (4) aufweist, der direkt in die Zentraleinheit (1) integriert ist, ohne über einen Rückwandplatinenbus zu gehen, wobei das Betriebssystem (10) der Zentraleinheit (1) ein Kommunikationsverwaltungsmodul (30) über das TCP/IP-Netzwerk (4) und eine Regelungstask (12) aufweist, die die Aufgabe hat, die Ausführung des Kommunikationsverwaltungsmoduls (30) den Eigenschaften der Automatisierungsanwendung unterzuordnen, um den Betrieb des Anwendungsprogramms (20) nicht zu stören.

2. Automatisierungsgerät nach Anspruch 1, **dadurch gekennzeichnet, dass**, wenn die Ausführung des Anwendungsprogramms (20) im periodischen Modus ist, die Regelungstask (12) Validierungsmittel (120) aufweist, die es ermöglichen, den Betrieb des Kommunikationsverwaltungsmoduls (30) zwischen dem Ende eines Zyklus des Anwendungsprogramms (20) und dem Beginn des folgenden Zyklus zu autorisieren.

3. Automatisierungsgerät nach Anspruch 1, **dadurch gekennzeichnet, dass**, wenn die Ausführung des Anwendungsprogramms (20) im zyklischen Modus ist, die Regelungstask (12) Validierungsmittel (120) aufweist, die es ermöglichen, am Ende eines Zyklus des Anwendungsprogramms (20) den Betrieb des Kommunikationsverwaltungsmoduls (30) während einer von einem Benutzer parametrierbaren Dauer zu autorisieren.

4. Automatisierungsgerät nach einem der Ansprüche 1 bis 3, **dadurch gekennzeichnet, dass** das Kommunikationsverwaltungsmodul (30) ein erstes Untermodul (31) aufweist, das eine Speicherzone nutzt, um übertragene oder für das Anwendungsprogramm (20) bestimmte Daten zu speichern.

5. Automatisierungsgerät nach Anspruch 4, **dadurch gekennzeichnet, dass** das Kommunikationsverwaltungsmodul (30) ein zweites Untermodul (32) aufweist, das eine Speicherzone nutzt, um übertragene oder für das TCP/IP-Netzwerk (4) bestimmte Daten zu speichern.

6. Automatisierungsgerät nach den Ansprüchen 4 und 5, **dadurch gekennzeichnet, dass** das erste Untermodul (31) des Kommunikationsverwaltungsmoduls (30) die vom Automatisierungs-Anwendungsprogramm (20) kommenden Daten zum zweiten Untermodul (32) des Kommunikationsverwaltungsmoduls überträgt, um eine über das TCP/IP-Netzwerk (4) übertragene Mitteilung zu erstellen.

7. Automatisierungsgerät nach Anspruch 6, **dadurch gekennzeichnet, dass** das zweite Untermodul (32) des Kommunikationsverwaltungsmoduls (30) die für die vom TCP/IP-Netzwerk kommenden Mitteilungen repräsentativen Informationen zum ersten Untermodul (31) des Kommunikationsverwaltungsmoduls überträgt, um vom Anwendungsprogramm (20) genutzt zu werden.

8. Automatisierungsgerät nach einem der vorhergehenden Ansprüche, **dadurch gekennzeichnet, dass** der TCP/IP-Netzwerk-Treiber (40) eine Routingprozedur der vom TCP/IP-Netzwerk (4) empfangenen Mitteilungen durchführt, die auf Prioritätsebenen basiert, die in der IP-Adressierung enthalten sind.
